# EUROPÄISCHE PATENTSCHRIFT

(11) **EP 0 993 249 B1**
(45) Veröffentlichungstag und Bekanntmachung des Hinweises auf die Patenterteilung: **22.01.2003**
(21) Anmeldenummer: 98929116.6
(22) Anmeldetag: 23.06.1998
(51) Int. Cl.: A21C 7/01, A21C 5/02

(54) **VORRICHTUNG ZUM RUNDWIRKEN VON TEIGSTÜCKEN**
DEVICE FOR CIRCULAR KNEADING OF DOUGH PIECES
DISPOSITIF POUR LE PETRISSAGE EN CERCLE DE MORCEAUX DE PATE

(30) Priorität: 30.06.1997 AT 111997
(43) Veröffentlichungstag der Anmeldung: 19.04.2000
(73) Patentinhaber: König Maschinen Gesellschaft mbH, 8045 Graz (AT)
(72) Erfinder: König, Elisabeth, 8045 Graz (AT)
(74) Vertreter: Wildhack, Helmut, Dr. Dipl.-Ing.
(86) Internationale Anmeldenummer: AT9800158
(87) Internationale Veröffentlichungsnummer: WO99001037

(56) Entgegenhaltungen:
- AT-B- 363 411
- DE-C- 639 896
- FR-A- 2 479 661

## Beschreibung

Die Erfindung bezieht sich auf eine Vorrichtung zum Rundwirken von Teigstücken, mit einer Trommel, die mit Öffnungen für die Aufnahme der zu wirkenden Teigstücke versehen ist, wobei das Wirken der Teigstücke durch eine in der Trommel angeordnete, relativ zu ihr eine Wirkbewegung ausführende, am Außenmantel mit den Öffnungen der Trommel zugeordneten Vertiefungen versehenen Innentrommet , gegebenenfalls im Zusammenwirken mit zumindest einem entlang eines Teiles Umfanges der Trommel geführten Wirkband, erfolgt, wobei zumindest in einem Abschnitt der unteren Trommelhälfte die Trommel von einer entlang ihres Umfanges geführten Abstützung begleitet ist, die eine Vielzahl untereinander zu einer Kette verbundener Glieder aufweist, welche in Richtung der Trommelachse langgestreckt sind und die Teigstücke in den Öffnungen der Trommel beim Wirken abstützen und mit dem Umlauf der Trommel, jedoch zumindest in einem Abschnitt des Umfanges der Trommel in Abstand von diesem, mitgeführt sind, wobei dieser Abstand vorzugsweise verstellbar ist.

Derartige Rundwirkvorrichtungen sind aus AT-B 363411 bekannt. Es ist ferner bekannt, beim Rundwirken von Teigstücken statt der mit Vertiefungen versehenen Innentrommel ein im Scheitelbereich der mit Aufnahmeöffnungen für die Teigstücke versehenen Trommel angeordnetes, zu einer Wirkbewegung angetriebenes Wirkwerkzeug zu verwenden, welches Werkzeug zumeist aus einer mit Vertiefungen versehenen Wirkplatte besteht.

Die Wirkbewegung kann - wie bekannt - in verschiedener Weise erfolgen: Zumeist vollführt das Wirkwerkzeug (die oben erwähnte Innentrommel oder die Wirkplatte) relativ zu den die Teigstücke aufnehmenden Öffnungen der Trommel eine kreisende, elliptische oder spiralförmige Bewegung, welche dem in der Öffnung der Trommel befindlichen Teigstück allmählich eine kugelige bzw. ballige Gestalt verleiht. Im Falle einer spiralförmigen Bewegung hat diese zu Beginn des Wirkvorganges kleine Ausschläge, die allmählich größer werden.

Bei einer bekannten Vorrichtung sind die zur Kette verbundenen Glieder als Rundstangen ausgebildet und zur Verbesserung der Abstützung der in den Aufnahmeöffnungen der Trommel angeordneten Teigstücke ist über diese Stangenkette ein endloses Band gelegt. Es ist auch bekannt, dieses Band durch über jeweils drei Abstützstangen gespannte Stoffschläuche zu ersetzen. Diese Vorrichtungen haben sich im allgemeinen bewährt, haben aber Nachteile bei sehr weichen und empfindlichen Teigen, z.B. Teigen für die Herstellung von Krapfen, Brioche-Waren, Hamburgern, usw. Solche Teige sind üblicherweise entweder durch eine sehr hohe Teigausbeute oder durch Zusätze von speziellen Zutaten, wie z. B. Zucker, Fett, Eier, usw. charakterisiert. An die damit hergestellten Backwaren werden hohe Anforderungen an eine glatte, saubere, streifenfreie Oberfläche gestellt, welche Oberflächenqualität natürlich schon an den fertig gewirkten Teigstücken vorhanden sein muß.

Es hat sich nun herausgestellt, daß die beschriebenen bekannten Vorrichtungen für die Herstellung solcher Backwaren nicht völlig befriedigen. Ein über eine endlose Abstützstabkette gelegtes Band wird beim Umlauf an den Umlenkungen der endlosen Bandkette gedehnt und gestaucht, da das Band nicht in der neutralen Mittellage der zu seinem Antrieb verwendeten Führungskette liegt. Dies führt zu laufenden Bandbeanspruchungen und damit zu einem hohen Bandverschleiß und an den Einlauf- und Auslaufstellen durch die erwähnte Dehnung bzw. Stauchung zu entsprechenden Beanspruchungen auf die Teigstücke. Der Ersatz des endlosen Bandes durch die über einzelne Stangen gespannten Stoffschläuche hat ebenfalls nicht befriedigt, da für die Abstützung der Teigstücke keine homogene, geschlossene Oberfläche mehr zur Verfügung steht. Zudem ergibt sich im Umlenkbereich der Abstützstabkette ein zusätzlicher, sich öffnender Bereich, der das Teigstück zwickt. Dies macht sich auch dort bemerkbar, wo vor diesem Umlenkbereich ein Anschleifband liegt.

Es wäre zwar möglich, bei einem endlosen Band dieses Band in der neutralen Zone zu führen, jedoch ist der hiefür erforderliche Aufwand beträchtlich.

Die Erfindung setzt sich zur Aufgabe, mit einfachem Aufwand die Abstützung der Teigstücke an der Gliederkette so zu verbessern, daß die zuvor erwähnten Abmarkierungen der Gliederkette auf die Teigstücke und damit auf die daraus hergestellten Backwaren vermieden werden. Die Erfindung löst diese Aufgabe dadurch, daß die Glieder und gegebenenfalls zwischen ihnen angeordnete Füllstücke an der der Trommel zugewendeten Seite eine geschlossene Oberfläche bilden, welche im gestreckten Zustand der Abstützung im wesentlichen eben ist. Diese geschlossene ebene Oberfläche stellt für die abzustützenden Teigstücke eine praktisch spaltlose und von Wirkvertiefungen freie Abstützungsfläche dar, welche durch solche Spalte bzw. Vertiefungen hervorgerufene Markierungen an den Teigstücken vermeidet. Hiefür ergeben sich im Rahmen der Erfindung mehrere bevorzugte Ausführungsformen: einerseits kann die Anordnung erfindungsgemäß so getroffen sein, daß jedes Füllstück von einem von den Gliedern gesonderten stabförmigen Bauteil gebildet ist, der von zwei einander benachbarten Glieder formschlüssig gehalten ist. Dies ergibt eine sehr kostengünstige Bauweise, da diese Füllstäbe, z. B. aus Kunststoff, in einfacher Weise herstellbar sind. Weiters hat diese Konstruktion eine sehr hohe Stabilität und einen hohen Selbstreinigungseffekt, der im Rahmen der Erfindung noch dadurch gesteigert werden kann, daß jedes Füllstück einen Querschnitt hat, der von zwei einander gegenüberliegenden Kreisbogenabschnitten und einer diese verbindenden Geraden begrenzt ist, wobei das Füllstück mit den von den Kreisbogenabschnitten gebildeten Zylinderflächen am Umfang der mit kreisrundem Querschnitt ausgebildeten Glieder anliegt und die von der Geraden gebildete ebene Fläche der Trommel zugewendet ist. Die Selbstreinigung entsteht vor allem bei den Umlenkungen der endlosen Gliederkette durch die Drehbewegung der Glieder relativ zu den Füllstücken.

Eine andere bevorzugte Ausführungsform besteht im Rahmen der Erfindung darin, daß der Querschnitt jedes Gliedes einen gegen das benachbarte Glied gerichteten Vorsprung hat, der an diesem Glied zur Bildung der geschlossenen Oberfläche anliegt. In bezug auf die spaltfreie Abstützung der Teigstücke, ohne an diesen Streifen oder dgl. zu hinterlassen, ist diese Bauweise gleichwertig mit der zuvor beschriebenen Variante, vom Standpunkt der Fertigung her gesehen, jedoch etwas aufwendiger, da die einzelnen Glieder, um eine teigabweisende Oberfläche zu erzielen, über einem metallischen Kern einen Kunststoffspritzteil aufweisen müssen. Von der Selbstreinigung her gesehen, ist die erstgenannte Variante ebenfalls noch besser, auch wenn eine besonders günstige Bauweise gewählt wird, bei welcher der Querschnitt des Vorsprunges an der dem benachbarten Glied zugewendeten Seite kreisbogenförmig konkav begrenzt ist und mit dieser Seite am kreisbogenförmigen Querschnitt des benachbarten Gliedes flächig anliegt, wobei der konkav begrenzte Querschnittsabschnitt in eine der Trommel zugewendete ebene Fläche übergeht.

Schließlich besteht auch noch die Möglichkeit, die Bauweise im Rahmen der Erfindung so zu treffen, daß die Glieder untereinander zu einem Gliederband durch Achsen verbunden sind, welche Achsen voneinander in Abstand liegen, wobei die Glieder diese Abstände überbrückende Fortsätze haben, die an ihrer der Trommel zugewendeten Seite die geschlossene Oberfläche bilden. Auch diese Bauweise erfüllt die Anforderungen, welche an die Abstützung der Teigstücke im erfindungsgemäßen Sinn gestellt werden, ist jedoch vom Standpunkt der Verschmutzungsgefahr her gesehen weniger günstig als die beiden erstgenannten Varianten.

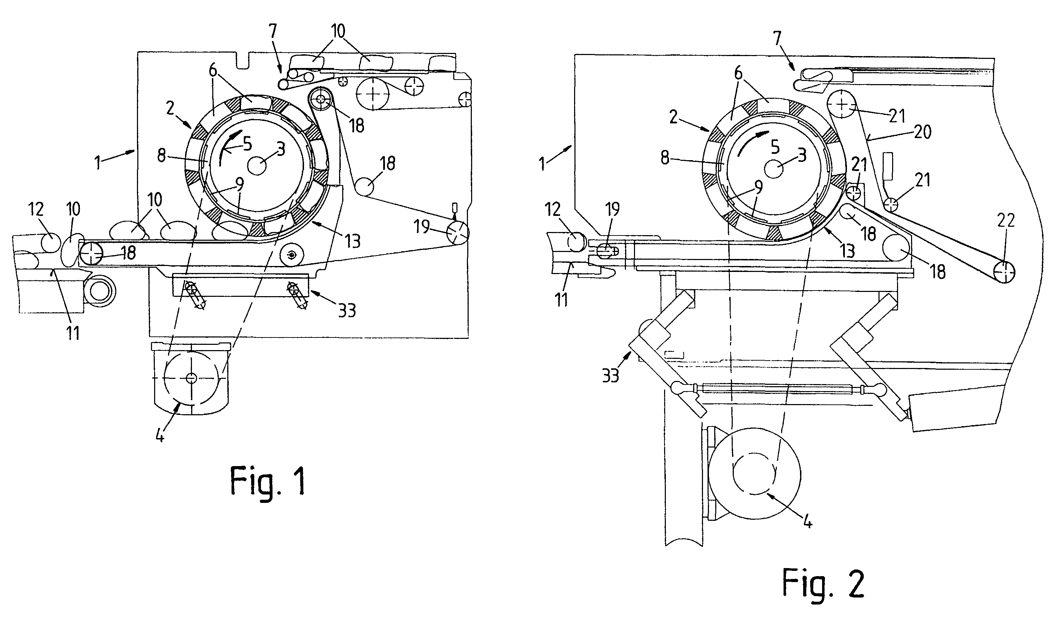

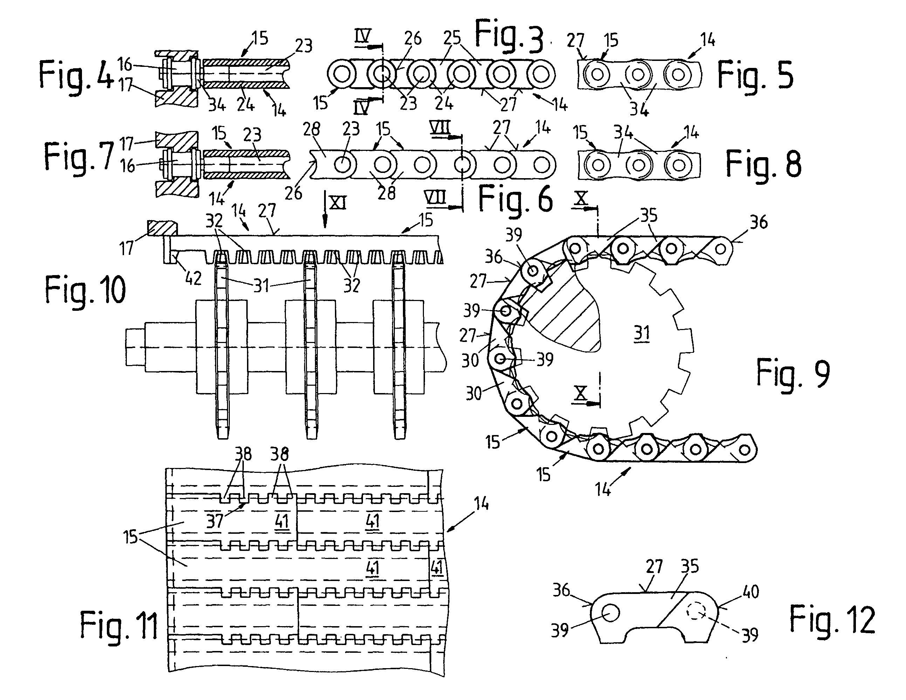

In der Zeichnung sind Ausführungsbeispiele der Erfindung schematisch dargestellt. Fig. 1 zeigt die wesentlichen Teile einer erfindungsgemäßen Vorrichtung zum Rundwirken von Teigstücken im Vertikalschnitt. Fig. 2 zeigt, ebenfalls im Vertikalschnitt, eine abgewandelte Ausführungsform. Fig. 3 zeigt im größeren Maßstab einen Abschnitt der Gliederkette, Fig. 4 ist ein Schnitt nach der Linie IV-IV der Fig. 3. Fig. 5 zeigt die Verbindung einzelner Glieder zu einer Gliederkette in Ansicht. Fig. 6 zeigt eine Ausführungsvariante zu Fig. 3. Fig. 7 ist ein Schnitt nach der Linie VII-VII der Fig. 6. Fig. 8 zeigt eine Ansicht ähnlich zu Fig. 5. Fig. 9 zeigt eine weitere Ausführungsvariante in Seitenansicht, teilweise im Schnitt. Fig. 10 ist ein Schnitt nach der Linie X-X der Fig. 9. Fig. 11 ist eine Draufsicht zu Fig. 10 in Richtung des Pfeiles XI der Fig. 10. Fig. 12 zeigt ein Detail in Seitenansicht.

Bei den Ausführungsformen nach den Fig. 1 und 2 hat die dort dargestellte Maschine ein Gestell 1, in welchem eine Trommel 2 um eine horizontale Achse 3 drehbar gelagert ist. Die Trommel 2 ist durch einen nicht dargestellten Antrieb zur schrittweisen oder kontinuierlichen Umlaufbewegung um ihre horizontale Achse 3 im Sinne des Pfeiles 5 angetrieben. Die Trommel 2 hat eine Vielzahl von, zweckmäßig in parallel zur Achse 3 verlaufenden Reihen angeordneten, Öffnungen 6, in welche die zu wirkenden Teigstücke 10 von einer Übergabevorrichtung 7 eingelegt werden. Diese Übergabevorrichtung 7 erhält die Teigstücke von einer nicht dargestellten Portioniervorrichtung. Innerhalb der Trommel 2 ist eine Innentrommel 8 konzentrisch zur Trommel 2 gelagert, welche Innentrommel 8 an ihrem Außenumfang mit Vertiefungen 9 für das Wirken der Teigstücke versehen ist und zusätzlich zu ihrer Umlaufbewegung um die Achse 3 zu einer Bewegung mittels eines Antriebes 4 derart angetrieben ist, daß die Vertiefungen 9 relativ zu den Öffnungen 6 eine kreisende, elliptische oder spiralförmige Bewegung vollführen.

Die Ablage der fertig gewirkten Teigstücke 10 (Fig. 1) erfolgt auf eine beliebige Auflage 11, z. B. ein endloses Band, Spreizbänder, usw. Oberhalb der Auflage 11 kann eine Rolle 12 vorgesehen sein, welche als Übergabehilfe wirkt und zusätzlich zur Einstellung der richtigen Schlußlage verwendet wird. Um zu verhindern, daß die Teigstücke 10 aus den Öffnungen 6, insbesondere in der unteren Hälfte der Trommel 2, bei deren Bewegung herausfallen, ist bei den Vorrichtungen nach den Fig. 1 und 2 im rechten und unteren Teil des Umfangs der Trommel 2 eine Abstützung 13 vorgesehen, welche den Umfang der Trommel 2 begleitet. Der Hauptzweck dieser Abstützung 13 ist aber, für die Teigstücke 10 beim Wirkvorgang einen Boden für die Wirkkammer zu bilden, welche von der Öffnung 6 gebildet ist. Diese Abstützung 13 ist von einer endlosen Kette 14 gebildet, deren einzelne Glieder 15 (Fig. 3, 4) einen kreisrunden Querschnitt haben und an ihren beiden Enden mit Rollen 16 an seitlichen Führungen 17 geführt sind, derart, daß die Gliederkette 14 den Umfang der Trommel begleitet, jedoch von diesem, insbesondere im unteren Umfangsbereich der Trommel 2, in geringem Abstand gehalten ist, um der beim Wirken des Teigstückes entstehenden balligen bzw. annähernd kugeligen Gestalt des Teigstückes 10 Platz zu lassen. Dieser Abstand ist zweckmäßig variabel, wofür eine Verstelleinrichtung 33 vorgesehen ist, mit welcher die Führung für die Gliederkette 14 so verlagerbar ist, daß der Spalt zwischen ihr und dem Umfang der Trommel 2 überall auf die gewünschte Größe eingestellt werden kann. Damit ist auch eine Einstellung des Wirkdruckes möglich. In der Regel wird dieser Spalt so eingestellt, daß er im unteren Bereich der Trommel 2 bzw. im Auslaufbereich der Teigstücke 10 größer ist als in jenem Bereich, welcher zu Beginn des Wirkvorganges vorliegt. Die Gliederkette 14 ist über Umlenkrollen 18 geführt, deren eine angetrieben ist, um den nötigen Umlauf der Gliederkette 4 zu sichern. Eine Spannrolle 19 sorgt für die nötige Spannung der Gliederkette 14. Im Bereich des unteren Scheitels der Trommel 2 fallen die Teigstücke 10 aus den Öffnungen 6 auf die Gliederkette 14 und werden von dieser in Richtung zur Auflage 11 transportiert, wo an der Stelle der Umlenkrolle 18 (Fig. 1) bzw. der Spannrolle 19 (Fig. 2), welche der Auflage 11 benachbart ist, der Abwurf der Teigstücke 10 auf die Auflage 11 erfolgt.

Bei der Ausführungsform nach Fig. 2 ist die endlose Gliederkette 14 der Abstützung 13 nur im unteren Bereich der Trommel 2 vorgesehen. Im Anschluß an die Stelle, an welcher die Teigstücke von der Übergabevorrichtung 7 in die Öffnungen 6 der Trommel 2 eingeworfen werden, ist bis nahe zur Abstützung 13 ein Wirkband 20 angeordnet, welches am Mantel der Trommel 2 anliegt und beim Wirkvorgang den Boden für die von den Öffnungen 6 gebildeten Wirkkammern bildet und so den Wirkdruck aufnimmt. Dieses Wirkband 20 ist über Umlenkrollen 21 geführt und durch eine Spannrolle 22 gespannt.

Eine beispielsweise Ausführungsform einer Stangenkette 14 ist in den Fig. 3, 4 und 5 näher dargestellt. Jedes Glied 15 ist stangenförmig und hat einen metallischen Kern, welcher die Achse 23 darstellt, an deren Enden die Rollen 16 angeordnet sind. Diese Achse 23 ist von einem Mantel 24 aus Kunststoff umgeben, der zweckmäßig aus teigabweisendem Material besteht. Statt dessen kann jedes Glied 15 von einem Rohr aus rostbeständigem Material (Nirosta oder dgl.) bestehen, was aus Gewichtsgründen günstig ist. Zwischen den einzelnen Gliedern 15 sind Füllstücke 25 angeordnet, welche zusammen mit Oberflächenteilen der Glieder 15 an der der Trommel 2 zugewandten Seite der Gliederkette 14 eine im wesentlichen geschlossene Oberfläche bilden, d. h. eine Oberfläche, die im wesentlichen spaltfrei ist. Hiezu sind die einzelnen Glieder 15 voneinander in Abstand angeordnet, welcher Abstand jeweils durch ein Füllstück 25 ausgefüllt ist, wobei die einzelnen Glieder 15 an ihren Enden durch Laschen 34 (Fig. 5) zur endlosen Kette verbunden sind. Die Füllstücke 25 sind von den Gliedern 15 formschlüssig gehalten und zweckmäßig auch seitlich bzw. an ihren Enden durch die Laschen 34 gehalten, sodaß die Füllstücke 25 nicht eigens in den Führungen 17 geführt zu werden brauchen. Hiezu hat jedes Füllstück 25 einen Querschnitt, der an den den beiden Stangen 15 zugewendeten Seiten von Kreisbogenabschnitten 26 begrenzt ist, mit denen das Füllstück 25 an den beiden ihm benachbarten Zylinderflächen der Stangen 15 flächig anliegt. Die beiden Kreisbogenabschnitte 26 des Querschnittes des Füllstückes 25 sind an ihren beiden Enden durch Gerade verbunden, sodaß zwischen den beiden von den Kreisbogenabschnitten 26 gebildeten Kreiszylinderflächen ebene Flächen 27 entstehen. Die der Trommel 2 zugewendeten ebenen Flächen 27 bilden zusammen mit den zwischen ihnen liegenden Umfangsabschnitten der Glieder 15 die geschlossene Oberfläche, welche bei gestreckter Kette (Fig. 3) im wesentlichen eben ist. An den Umlenkstellen der Kette 14, also im Bereich der Umlenkrollen 18, entstehen keine Spalten zwischen den Gliedern 15 und den Füllstücken 25, da sich nur die von den Kreisbogenabschnitten 26 gebildeten Kreiszylinderflächen am kreiszylindrischen Umfang der Glieder 15 verschieben, aber keine Spalte öffnen. Die erwähnte Verschiebung ergibt auch eine Selbstreinigung der Kette 14 von hängengebliebenen Teigresten.

Eine Ausführungsvariante der Kette 14 ist in den Fig. 6 bis 8 dargestellt. Bei dieser Ausführungsform hat der Querschnitt jedes Gliedes 15 einen gegen das benachbarte Glied 15 gerichteten Vorsprung 28, der am benachbarten Glied anliegt und mit diesem an der der Trommel 2 zugewandten Seite der Kette 14 eine geschlossene Oberfläche bildet. Die Achse 23 jedes Gliedes 15 ist daher von einem einstückigen Kunststoffkörper umgeben, dessen Querschnitt an der dem benachbarten Glied 15 zugewendeten Seite von einem Kreisbogenabschnitt 26 in analoger Weise gebildet ist, wie dies in Fig. 3 dargestellt ist. Zumindest an der der Trommel 2 zugewendeten Seite geht der kreisbogenförmige Abschnitt 26 des Querschnittes des Vorsprunges 28 in eine ebene Fläche 27 über, sodaß sich an der der Trommel 2 zugewendeten Seite der Kette 14 eine geschlossene, spaltfreie Oberfläche ergibt, auch an den Umlenkstellen der Kette 14. Auch bei dieser Ausführungsform sind die einzelnen Glieder 15 durch Laschen 34 zur Kette untereinander verbunden. Auch bei dieser Ausführungsform tritt eine Selbstreinigung der einzelnen Glieder der Kette 14 auf.

Bei der Ausführungsform nach den Fig. 10 bis 12 ist die Kette 14 von einer Gliederkette nach Art einer Raupenkette ausgebildet. Auch hier sind die einzelnen Glieder 15 untereinander zu einer endlosen Kette verbunden, welche wie ein Gliederband mit Gelenkstellen ausgebildet ist. Die einzelnen Gelenkstellen 29 liegen voneinander in Abstand und die einzelnen Glieder 15 haben diese Abstände überbrückende Fortsätze 30, ähnlich den Vorsprüngen 28 der Ausführungsform nach den Fig. 6 bis 8, jedoch in anderer Form. Dieser Fortsatz 30 verleiht dem Grundkörper des betreffenden Gliedes 15 plattenartige Form, welche an der der Trommel 2 zugewendeten Seite des Gliederbandes eine ebene Fläche 27 hat. Die dem benachbarten Glied 15 zugewendete Seite des plattenförmigen Grundkörpers läuft - im Querschnitt gesehen - zu einer Spitze 35 (Fig. 9, 12) aus, welche an einem kreiszylindrisch ausgebildeten Oberflächenteil 36 des jeweils benachbarten Gliedes 15 anliegt. Dadurch ergibt sich auch an den Umlenkstellen der Kette 14 eine geschlossene, spaltfreie Oberfläche als Abstützung für die Teigstücke (Fig. 9). Die Verbindung einzelner Glieder 15 zur Kette 14 erfolgt hier nicht durch Laschen, sondern dadurch, daß benachbarte Glieder 15 miteinander nach Art eines Scharnieres 37 verbunden sind (Fig. 11). Hiezu haben die einzelnen Glieder 15 an den einander zugewendeten Rändern Vorsprünge, welche nach Art von Zähnen 38 jeweils ineinandergreifen. Diese Zähne 38 sind von Rundstäben 39 aus Kunststoff durchsetzt, welche die Gelenkachsen der Scharniere 37 bilden. Um die erwähnte geschlossene Oberfläche auch an den Umlenkstellen der Kette 14 zu erhalten, haben die Zähne 38 an ihrer der Trommel 2 zugewendeten Seite abgerundete Flächen 40 (Fig. 12), wobei das Zentrum dieser Abrundungen mit dem Zentrum der jeweiligen Achse (Rundstab 39) zusammenfällt.

Um die Herstellung der einzelnen Glieder 15 zu erleichtern, ist - wie Fig. 11 zeigt - jedes Glied 15 in Richtung der Achse 3 der Trommel 2, also seiner Länge nach, in einzelne Abschnitte 41 unterteilt. Der Zusammenhalt erfolgt durch die Rundstäbe 39, die gegen Herausziehen aus den Scharnieren 37 durch Flanschen 42 (Fig. 10) an den Rändern der äußersten Abschnitte 41 gesichert sind.

Ein solches Gliederband kann in ähnlicher Weise angetrieben werden wie die endlosen Ketten 14 nach den Ausführungsformen gemäß den Fig. 3 bis 8, d. h. durch Antrieb an zumindest einer der Umlenkrollen 18. Während bei den Ausführungsformen nach den Fig. 3 bis 8 die einzelnen Glieder 15 jedoch mit den Rollen 16 an den Führungen 17 geführt sind, und an der als Antrieb dienenden Umlenkrolle 18 die Kraft über die Rollen 16 eingeleitet wird, brauchen bei der Ausführungsform nach den Fig. 9 bis 12 die einzelnen Glieder 15 seitlich nicht in Führungen 17 geführt zu werden. Statt dessen folgt die Führung über Kettenräder 31 (Fig. 8) an den Umlenkrollen 18. Diese Kettenräder 31 greifen in Ausnehmungen 32 an der der Trommel 2 abgewandten Seite der Glieder 15 ein und treiben dadurch einerseits die Kette 14 an, anderseits bewirken sie eine seitliche Führung der einzelnen Glieder 15. Um die Gliederkette 15 im gewünschten Abstand von der Trommel 2 zu halten, ist die Führung 17 vorhanden.

## Patentansprüche

1. Vorrichtung zum Rundwirken von Teigstücken (10), mit einer Trommel (2), die mit Öffnungen (6) für die Aufnahme der zu wirkenden Teigstücke (10) versehen ist, wobei das Wirken der Teigstücke (10) durch eine in der Trommel (2) angeordnete, relativ zu ihr eine Wirkbewegung ausführende, am Außenmantel mit den Öffnungen (6) der Trommel (2) zugeordneten Vertiefungen (9) versehene Innentrommel (8), gegebenenfalls im Zusammenwirken mit zumindest einem entlang eines Teiles des Umfanges der Trommel (2) geführten Wirkband (20), erfolgt, wobei die Trommel (2) zumindest in einem Abschnitt der unteren Trommelhälfte von einer entlang des Trommelumfanges geführten Abstützung (13) begleitet ist, die eine Vielzahl untereinander zu einer Kette (14) verbundener Glieder (15) aufweist, welche in Richtung der Trommelachse (3) langgestreckt sind und die Teigstücke (10) in den Öffnungen (6) der Trommel (2) beim Wirken abstützen und mit dem Umlauf der Trommel (2), jedoch zumindest in einem Abschnitt des Umfanges der Trommel (2) in Abstand von dieser, mitgeführt sind, wobei dieser Abstand vorzugsweise verstellbar ist, **dadurch gekennzeichnet, daß** die Glieder (15) und gegebenenfalls zwischen ihnen angeordnete Füllstücke (25) an der der Trommel (2) zugewendeten Seite eine geschlossene Oberfläche bilden, welche im gestreckten Zustand der Abstützung (13) im wesentlichen eben ist.

2. Vorrichtung nach Anspruch 1, **dadurch gekennzeichnet, daß** jedes Füllstück (25) von einem von den Gliedern (15) gesonderten stabförmigen Bauteil gebildet ist, der von zwei einander benachbarten Gliedern (15) formschlüssig gehalten ist.

3. Vorrichtung nach Anspruch 2, **dadurch gekennzeichnet, daß** jedes Füllstück (25) einen Querschnitt hat, der von zwei einander gegenüberliegenden Kreisbogenabschnitten (26) und einer diese verbindenden Geraden begrenzt ist, wobei das Füllstück (25) mit den von den Kreisbogenabschnitten (26) gebildeten Zylinderflächen am Umfang der mit kreisrundem Querschnitt ausgebildeten Glieder (15) anliegt und die von der Geraden gebildete ebene Fläche (27) der Trommel (2) zugewendet ist.

4. Vorrichtung nach Anspruch 1, **dadurch gekennzeichnet, daß** der Querschnitt jedes Gliedes (15) einen gegen das benachbarte Glied (15) gerichteten Vorsprung (28) hat, der an diesem Glied (15) zur Bildung der geschlossenen Oberfläche anliegt.

5. Vorrichtung nach Anspruch 4, **dadurch gekennzeichnet, daß** der Querschnitt des Vorsprunges (28) an der dem benachbarten Glied (15) zugewendeten Seite kreisbogenförmig konkav begrenzt ist und mit dieser Seite am kreisbogenförmigen Querschnitt des benachbarten Gliedes (15) flächig anliegt, wobei der konkav begrenzte Oberflächenabschnitt in eine der Trommel (2) zugewendete ebene Fläche (27) übergeht.

6. Vorrichtung nach Anspruch 1, **dadurch gekennzeichnet, daß** die Glieder (15) untereinander zu einem Gliederband durch Achsen (39) verbunden sind, welche Achsen (39) voneinander in Abstand liegen, wobei die Glieder (15) diese Abstände überbrückende Fortsätze (30) haben, die an ihrer der Trommel (2) zugewendeten Seite die geschlossene Oberfläche bilden.

7. Vorrichtung nach Anspruch 6, **dadurch gekennzeichnet, daß** benachbarte Glieder (15) miteinander scharnierartig verbunden sind, wobei die Achsen (39) Zähne (38) der Scharniere (37) durchsetzen und diese Zähne (38) an ihrer der Trommel (2) zugewendeten Seite kreiszylindrisch abgerundete Flächen (40) haben, wobei das Zentrum dieser Abrundungen mit dem Zentrum der jeweiligen Achse (39) zusammenfällt.

## Claims

1. A device for working dough pieces (10) into a round shape, having a drum (2) provided with openings (6) for receiving the dough pieces (10) to be worked, the dough pieces (10) being worked by an inner drum (8), possibly cooperating with at least one kneading belt (20) guided along part of the periphery of the drum (2), said inner drum (8) being arranged in the drum (2), performing a kneading movement relative thereto and being provided with slots (9) on the outer circumference which are associated with the openings (6) in the drum (2), the drum (2) being accompanied over at least one portion of the lower drum half by a support means (13) which is guided along the periphery of the drum and has a plurality of links (15) which are interconnected to form a chain (14), are elongated in the direction of the drum axis (3) and support the dough pieces (10) in the openings (6) of the drum (2) during working and follow the rotation of the drum (2), at least over a portion of the periphery of the drum (2), at a clearance therefrom, this clearance preferably being adjustable, **characterised in that** the links (25), and possibly filler pieces (25) arranged between them, form a closed surface on the side facing the drum (2), which surface is substantially planar in the stretched state of the support means (13).

2. A device according to Claim 1, **characterised in that** each filler piece (25) is formed by a rod-shaped component, which is separate from the links (15) and is held interlockingly by two mutually adjacent links (15).

3. A device according to Claim 2, **characterised in that** each filler piece (25) has a cross-section which is delimited by two mutually opposing circular arc portions (26) and a straight portion connecting them, the filler piece (25) abutting with its cylindrical faces formed by the circular arc portions (26) against the periphery of the links (15) having a circular cross-section, and the planar face (27) formed by the straight portion facing towards the drum (2).

4. A device according to Claim 1, **characterised in that** the cross-section of each link (15) has a projection (28) which is directed towards the adjacent link (15) and abuts against this link (15) to form the closed surface.

5. A device according to Claim 4, **characterised in that** the cross-section of the projection (28) is concavely delimited in the form of a circular arc at the side facing the adjacent link (15) and with this side abuts flat against the circular arc shaped cross-section of the adjacent link (15), the concavely delimited surface portion merging into a planar face (27) facing the drum (2).

6. A device according to Claim 1, **characterised in that** the links (15) are interconnected by pins (39) to form a link belt, which pins (39) are at a mutual spacing, the links (15) having extensions (30) which bridge these spacings and form the closed surface at their side facing the drum (2).

7. A device according to Claim 6, **characterised in that** adjacent links (15) are connected together in a hinged manner, the pins (39) penetrating teeth (38) of the hinges (37) and these teeth (38) having cylindrically rounded faces (40) at their side facing the drum (2), the centre of these rounded portions coinciding with the centre of the respective pin (39).

## Revendications

1. Dispositif pour pétrir en cercle des morceaux de pâte (10), comprenant un tambour (10) muni d'ouvertures (6) destinées à recevoir les morceaux de pâte (10) à pétrir, sachant que le pétrissage des morceaux de pâte (10) est réalisé, le cas échéant en coopération avec au moins une bande de pétrissage (20) guidée le long d'une partie du pourtour du tambour (2), par un tambour intérieur (8) placé dans le tambour (2), qui effectue un mouvement de pétrissage par rapport à ce dernier et qui est muni au niveau de l'enveloppe de renfoncements (9) associés aux ouvertures (6) du tambour (2), sachant que le tambour (2) est accompagné, tout au moins dans une partie de la moitié inférieure du tambour, par un support (13) s'étendant le long du pourtour du tambour, qui présente de nombreux maillons (15) reliés entre eux de manière à former une chaîne (14), lesquels maillons sont allongés dans la direction de l'axe (3) du tambour, supportent les morceaux de pâte (10) dans les ouvertures (6) du tambour (2) lors du pétrissage et tournent en même temps que le tambour (2) en étant cependant distants de celui-ci au moins sur une partie du pourtour du tambour (2), sachant que cette distance est de préférence réglable, **caractérisé en ce que** les maillons (15) et le cas échéant des pièces intercalaires (25) placées entre eux forment sur le côté tourné vers le tambour (2) une surface fermée qui, lorsque le support (13) est rectiligne, est essentiellement plane.

2. Dispositif selon la revendication 1, **caractérisé en ce que** chaque pièce intercalaire (25) est formée par un élément en forme de bâtonnet distinct des maillons (15), qui est maintenu par engagement positif par deux maillons adjacents (15).

3. Dispositif selon la revendication 2, **caractérisé en ce que** chaque pièce intercalaire (25) possède une section transversale délimitée par deux arcs de cercle (26) opposés et par une droite reliant ces derniers, sachant que la pièce intercalaire (25) est appliquée avec les surfaces cylindriques formées par les arcs de cercle (26) contre le pourtour des maillons (15) de section transversale circulaire et que la surface plane (27) formée par la droite est tournée vers le tambour (2).

4. Dispositif selon la revendication 1, **caractérisé en ce que** la section transversale de chaque maillon (15) possède une saillie (28) dirigée vers le maillon (15) voisin, qui est appliquée contre ce maillon (15) pour former la surface fermée.

5. Dispositif selon la revendication 4, **caractérisé en ce que** la section transversale de la saillie (28) a la forme d'un arc de cercle concave sur le côté tourné vers le maillon adjacent (15) et **en ce que** la saillie est appliquée à plat avec ce côté contre la section transversale en arc de cercle du maillon voisin (15), sachant que la portion de surface concave devient une surface plane (27) tournée vers le tambour (2).

6. Dispositif selon la revendication 1, **caractérisé en ce que** les maillons (15) sont reliés entre eux par des axes (39) pour former une bande de maillons, lesquels axes (39) sont espacés les uns des autres, sachant que les maillons (15) possèdent des prolongements (30) comblant ces espaces qui forment sur leur côté tourné vers le tambour (2) la surface fermée.

7. Dispositif selon la revendication 6, **caractérisé en ce que** des maillons adjacents (15) sont assemblés à la manière d'une charnière, les axes (39) traversant des dents (38) des charnières (37) et ces dents (38) présentant sur leur côté tourné vers le tambour (2) des surfaces arrondies en forme de cylindres circulaires (40), sachant que le centre de ces arrondis coïncide avec le centre de l'axe (39) associé.
